# EUROPEAN PATENT APPLICATION

(11) **EP 1 956 532 A1**
(43) Date of publication of application: **13.08.2008**
(21) Application number: 07102100.0
(22) Date of filing: 09.02.2007
(51) Int. Cl.: G06Q 10/00

(54) **Electronic device and method of sharing calendar-event information**

(71) Applicant: Research In Motion Limited, Waterloo, Ontario N2L 3W8 (CA)
(72) Inventor: Jain, Rohit Rocky, Waterloo Ontario N2T 2T8 (CA); May, Darrell Reginald, Waterloo Ontario N2V 2K6 (CA)
(74) Representative: Rickard, David John

(57) **Abstract**

A method of sharing with a portable electronic device of a first entity, calendar-event records associated with a second entity and accessible by a server. The method includes receiving at the server permission to share with the first entity the calendar-event records associated with the second entity, receiving at the server a query including calendar-event time constraints, obtaining at the server ones of the calendar-event records that meet the calendar-event time constraints, and transmitting, from the server to the portable electronic device of the first entity, the ones of the calendar-event records that meet the calendar-event time constraints.

## Description

The present disclosure relates generally to sharing of calendar-event information between electronic devices.

Portable electronic devices including, for example, smart telephones and wireless PDAs are becoming increasingly common and typically integrate functions of personal information management such as calendaring and data communications such as e-mail, World Wide Web browsing and telecommunications in a single device. Such devices run on a wide variety of networks from data-only networks such as Mobitex and DataTAC to complex voice and data networks such as GSM/GPRS, CDMA, EDGE, UMTS and CDMA2000 networks.

It is common for individuals to use such portable electronic devices for storing calendar events for display on the device in an electronic calendar. Some portable electronic devices allow the user of the device to schedule meetings with invitees by creating a new calendar event and entering information such as the time of the meeting, the location and contact information of the invitees. An electronic message is then sent to the invitees in the form of an invitation to the meeting, typically via electronic mail (e-maii). Such electronic invitations provide the invitee with the option to accept or decline the invitation to the meeting. If accepted, the meeting is stored as a calendar event in the electronic calendar of the invitee. In some instances, it is desirable to advise an interested party of a meeting taking place. For example, a person may wish to be advised that a particular meeting is taking place and may even be interested in the outcome. However, that person does not wish to be present at the meeting.

Still other persons may wish to be advised of scheduled calendar events or be updated on or advised of any outcome of a calendar event.

Improvements for providing information regarding scheduled calendar events are desirable.

### GENERAL

According to one aspect, there may be provided a method of sharing with a portable electronic device of a first entity, calendar-event records associated with a second entity and accessible by a server. The method may include receiving at the server permission to share with the first entity the calendar-event records associated with the second entity, receiving at the server a query including calendar-event time constraints, obtaining at the server ones of the calendar-event records that meet the calendar-event time constraints, and transmitting, from the server to the portable electronic device of the first entity, the ones of the calendar-event records that meet the calendar-event time constraints.

According to another aspect, there may be provided a method of requesting, from a portable electronic device of a first entity, shared calendar-event records associated with a second entity and accessible by a server. The method may include receiving at the portable electronic device of the first entity, notification of permission to view the shared calendar-event records associated the second entity, transmitting, from the portable electronic device of the first entity to the server, a request for ones of the shared calendar-event records that meet a set of time constraints, and receiving the ones of the shared calendar-event records for display on the portable electronic device of the first entity.

According to another aspect, there may be provided a communication system for sharing with a portable electronic device of a first entity, calendar-event records associated with a second entity. The communication system may include a memory device for storing the calendar-event records associated with the second entity, a system server in connection with the memory device for receiving permission to share the calendar-event records with the first entity, receiving a query including calendar-event time constraints from the first entity and obtaining from the memory device, ones of the calendar-event records that meet the calendar-event time constraints, and a transmission system for transmitting the ones of the calendar-event records to the portable electronic device of the first entity.

According to another aspect, there may be provided a portable electronic device for requesting shared calendar-event records associated with a second entity and accessible by a server. The portable electronic device may include a housing, a display device mounted within the housing, a user input device mounted within the housing, a memory mounted within the housing, a communications system for effecting communication to and from the electronic device, a microprocessor within the housing and connected to the memory, the user input device, the display device, and the communications system, and an application for execution by the microprocessor. The application may be for receiving a notification of permission to view the shared calendar-event records associated the second entity, transmitting a request from the portable electronic device of the first entity to the server for ones of the shared calendar-event records that meet a set of time constraints, and receiving the ones of the shared calendar-event records for display on the display device.

According to yet another aspect, there may be provided a computer program product for a system server. The computer program product may include a computer-readable medium having computer-readable code embodied therein for receiving permission at the system server to share with a first entity, calendar-event records associated with the second entity, receiving at the system server a query including calendar-event time constraints, obtaining at the system server ones of the calendar-event records that meet the calendar-event time constraints, and transmitting, from the system server to the first entity, the ones of the calendar-event records that meet the calendar-event time constraints.

According to still another aspect, there may be provided computer program product for a portable electronic device. The computer program product may include a computer-readable medium having computer-readable code embodied therein for receiving a notification of permission to view shared calendar-event records associated with a second entity, transmitting a request to a server for ones of the shared calendar-event records that meet a set of time constraints, and receiving the ones of the shared calendar-event records for display.

Advantageously, calendar-event records can be shared between portable electronic devices by permitting view-only access to calendar-event records. A user wishing to view calendar-event records of another user can receive those calendar-event records for viewing if permission has been granted. The calendar-event records received may be based on user-selected time constraints. Further, when viewing shared calendar events, the user can request addition to any shared calendar event by selection of a request option to be added to the calendar-event details.

### BRIEF DESCRIPTION OF THE DRAWINGS

The embodiments described herein will be better understood with reference to the description and to the following Figures, in which:

Figure 1 is a functional block diagram of a radio communication system including portable electronic devices and a communication system having an enterprise server according to one embodiment of the present application;

Figure 2 is a front view of an exemplary portable electronic device for use with the radio communication system of Figure 1, according to an embodiment;

Figure 3 is a block diagram of certain components, including internal components within the portable electronic device of Figure 2;

Figure 4 is an exemplary menu screen displayed on a display of the portable electronic device of Figure 2;

Figure 5 is a flowchart showing the steps in a method of providing a meeting notification according to an embodiment;

Figures 6 to 12 show exemplary screens displayed on the display of the portable electronic device at various steps in the method of Figure 5;

Figure 13 is a flowchart showing the steps in a method of providing a meeting notification according to another embodiment;

Figures 14 to 18 show exemplary screens displayed on the display of the portable electronic device at various steps in the method of Figure 13;

Figure 19 is a flowchart showing the steps in a method of providing a meeting notification according to another embodiment;

Figures 20 and 21 show exemplary screens displayed on the display of the portable electronic device at steps in the method of Figure 19;

Figure 22 is a flowchart showing steps in a method of providing a meeting notification according to another embodiment;

Figures 23 and 24 show exemplary screens displayed on the display of the portable electronic device at steps in the method of Figure 22;

Figure 25 is a flowchart showing steps in a method of sharing calendar events according to an aspect of an embodiment;

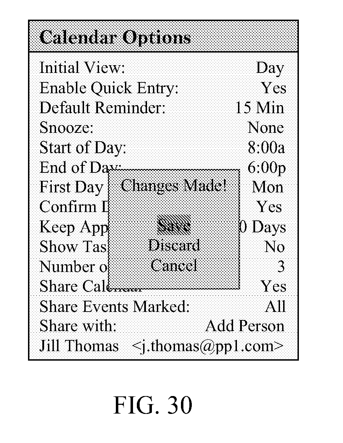

Figures 26 to 30 show exemplary screens displayed on the display of the portable electronic device at steps in the method of Figure 25;

Figure 31 is a flowchart showing steps in a method of sharing calendar events according to another aspect of an embodiment;

Figures 32 to 34 show exemplary screens displayed on the display of the portable electronic device at steps in the method of Figure 31;

Figure 35 is a flowchart showing steps in a method of requesting addition to a calendar event according to an aspect of an embodiment;

Figure 36 shows an exemplary screen displayed on the display of the portable electronic device in the method of Figure 35;

Figure 37 is a flowchart showing steps in a method of requesting addition to a calendar event according to another embodiment;

Figures 38 to 41 show exemplary screens displayed on the display of the portable electronic device at steps in the method of Figure 37; and

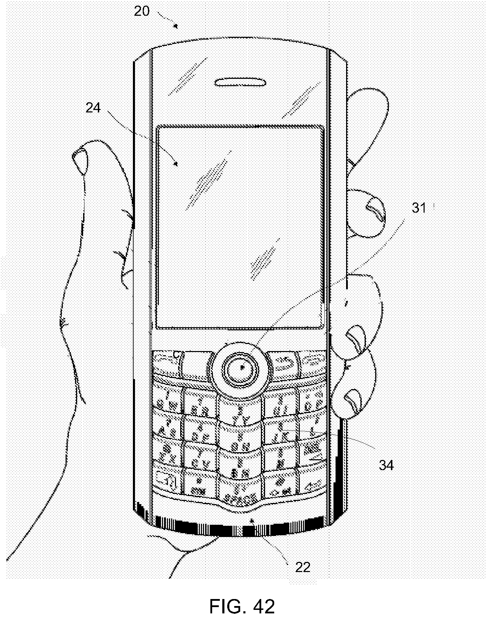

Figure 42 is a front view of an exemplary portable electronic device, according to another embodiment.

### DESCRIPTION OF PREFERRED EMBODIMENTS

In the following description, specific details are set forth for the purpose of thorough understanding and explanation of embodiments of the present application. It will be understood, however, that the present application is not limited to the specific details set forth herein. Those skilled in the art will recognize that certain structures and method steps can vary from those described herein.

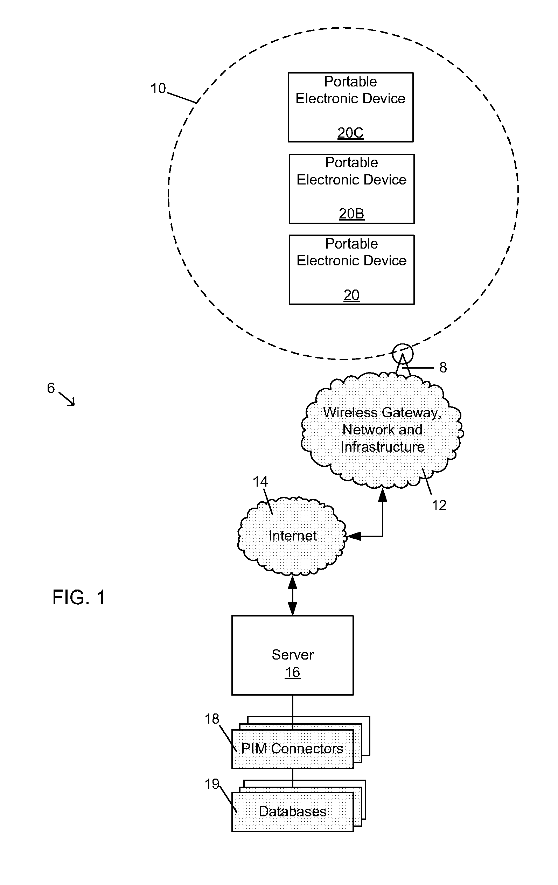

Reference is first made to Figure 1 which shows a functional block diagram of a radio communication system indicated generally by the numeral 6 and portable electronic devices 20, 20B and 20C. The radio communication system 6 provides for communications with portable electronic devices including the exemplary portable electronic devices 20, 20B, 20C, as shown. The portable electronic devices 20, 20B, 20C and the radio communication system 6 are operable to effect over-the-air communications therebetween via a radio communications channel. Data originating at the portable electronic devices 20, 20B, 20C is communicated to the radio communication system 6 by way of the radio communications channel. Similarly, data originating at the radio communication system 6 is communicated from the radio communication system 6 to any of the portable electronic devices 20, 20B, 20C by way of the radio communications channel, thereby providing data to the portable electronic devices 20, 20B, 20C.

For the purposes of illustration, the communication system 6 is functionally represented in Figure 1 and a single base station 8 is shown. The base station 8 defines a coverage area, or cell 10 within which communications between the base station 8 and the portable electronic devices 20 20B, 20C can be effectuated. It will be appreciated that the portable electronic devices 20, 20B, 20C are movable within the cell 10 and can be moved to coverage areas defined by other cells that are not illustrated in the present example. In the present example, the base station 8 and wireless gateway, network and infrastructure 12 are part of, for example, a data-only network such as Mobitex or DataTAC, or a complex voice and data network such as a GSM/GPRS, CDMA, EDGE, UMTS or CDMA2000 network. The base station 8 is connected to an enterprise server 16 via the wireless gateway, network and infrastructure 12 and via the internet 14.

The enterprise server 16 is also functionally coupled through personal information management connectors 18 to respective databases 19. The personal information management connectors 18 interface between the server 16 and the respective databases 19. It will be understood that the personal information management connectors 18 are a functional component and can be provided by way of an application on the enterprise server 16. The databases of the present example are of a text format such as an Extensible Mark-up Language (XML) format. Each database to which a user has access, is connected through one of the personal information management connectors 18. The data maintained in one of the databases 19 includes a number of data records such as calendar-event data records.

For the purposes of illustration, three portable electronic devices 20, 20B, 20C are shown in the cell 10. It will be appreciated that the present application is not limited to three portable electronic devices and that any and/or all of these portable electronic devices can be located within or moved to coverage areas defined by other cells (not shown).

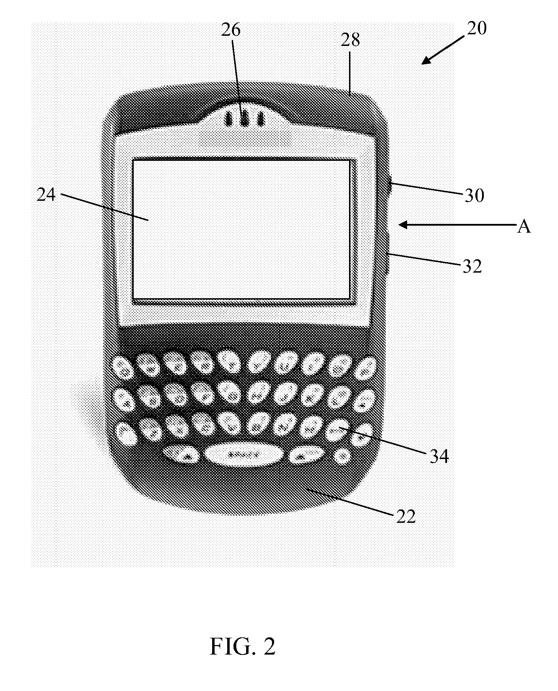

Referring now to Figure 2, an exemplary portable electronic device 20 in accordance with an embodiment is shown. In the present embodiment, the portable electronic device 20 is based on the computing environment and functionality of a hand-held wireless communication device. It will be understood, however, that the electronic device is not limited to a hand-held wireless communication device. Other electronic devices are possible, such as cellular telephones, smart telephones, laptop computers and desktop computers. Referring again to the present embodiment, the portable electronic device 20 includes a housing 22 that frames an LCD display 24, a speaker 26, an LED indicator 28, a trackwheel 30, an exit key 32, a keypad 34, and a microphone 36. The trackwheel 30 and the exit key 32 can be inwardly depressed along the path of arrow "A" as a means to provide additional user input. The housing 22 is made from a suitable material as will occur to those skilled in the art and can be stored, for example, in a holster (not shown) that includes an attachment for attaching to a user's belt.

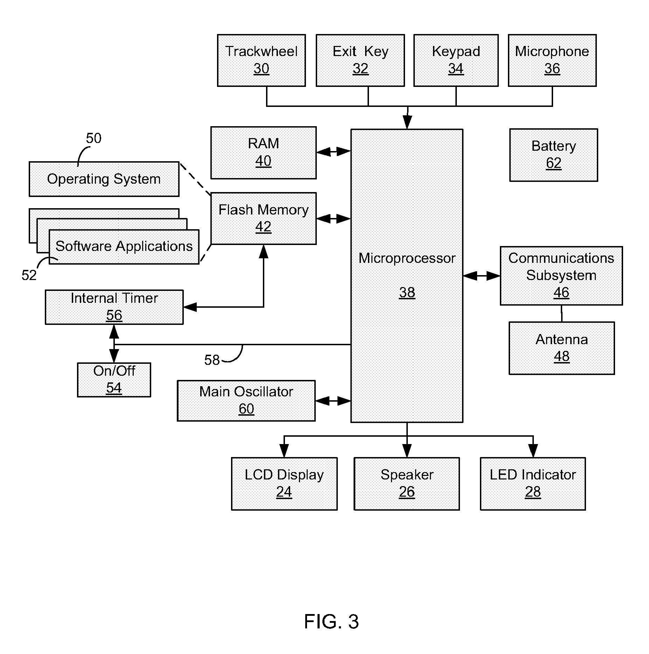

Referring now to Figure 3, a block diagram of certain components, including internal components within the portable electronic device 20, is shown. The portable electronic device 20 is based on a microcomputer that includes a microprocessor 38 connected to a random access memory (RAM) unit 40 and a persistent storage device, which in the present embodiment is a flash memory 42 that is responsible for various non-volatile storage functions of the portable electronic device 20. Operating system software 50 executable by the microprocessor 38 is stored in the flash memory 42. It will be appreciated, however, that the operating system software 50 can be stored in other types of memory such as read-only memory (ROM). In the present embodiment, software applications 52 including Personal Information Manager (PIM) applications are stored in the persistent storage device 42 for execution by the microprocessor 38 for carrying out various functions. The flash memory 42 of the portable electronic device 20 also includes databases that correspond to the databases 19 of the communication system 6. The microprocessor 38 receives input from various input devices including the trackwheel 30, the exit key 32, and the keypad 34, and outputs to various output devices including the LCD display 24, the speaker 26 and the LED indicator 28. The microprocessor 38 also interacts with on/off circuitry 54 for powering up the portable electronic device 20 and powering down the portable electronic device 20, and an internal timer 56.

In the present embodiment, the portable electronic device 20 is a two-way RF communication device having voice and data communication capabilities. The portable electronic device 20 also includes Internet communication capabilities. Two-way RF communication is facilitated by a communications subsystem 46 and antenna 48 that are used to connect to and operate with the communication system 6 shown in Figure 1.

As indicated above, the flash memory 42 stores a plurality of applications executable by the microprocessor 38 that enable the portable electronic device 20 to perform certain operations including the communication operations referred to above. Applications software is provided including, for example, PIM applications such as an electronic mail (messages) application, an address book application, a tasks application, and a calendar application, as well as other applications such as a Web browser application, an options application and a profiles application.

In a data communication mode, a received signal such as a text message or Web page download is processed by the communications subsystem 46 and input to the microprocessor 38 for further processing of the received signal for output to the LCD display 24. A user of the portable electronic device 20 can also compose data items within a software application such as an e-mail messaging application using the keypad 34, for example, in conjunction with the trackwheel 30 and the LCD display 24. Such composed items can then be transmitted over the communications network through the communications subsystem 46 and antenna 48.

Although not shown, a short-range communications subsystem can also be provided for communication between the portable electronic device 20 and other devices or systems. Such short-range communications subsystems include, for example, an infrared device as well as associated components and circuitry, and a Bluetooth^{™} communication system.

A rechargeable battery 62 such as a Li-ion battery is provided for powering the portable electronic device 20.

The user can power down the portable electronic device 20 to a power-off or low-power state by pressing a power on/off button (not shown). Alternatively, the device can be powered up or powered down using a combination of buttons that activate the on/off circuitry 54. As indicated above, the portable electronic device 20 includes an internal timer 56 that can also deliver an interrupt on the interrupt line 58 to power up the portable electronic device 20 when the portable electronic device 20 is in a power-down state and to power down the device when the portable electronic device 20 is in the power-up state. The internal timer 56 is responsible for keeping track of the date and time when the portable electronic device 20 is turned off. A main oscillator 60 is also provided for generating a relatively high-frequency (MHz) clock signal compared to that generated by the oscillator that is part of the internal timer 56 (tens of kHz). The main oscillator 60 includes circuitry that operates when the portable electronic device is on for providing a clock signal to the microprocessor 38 and other components.

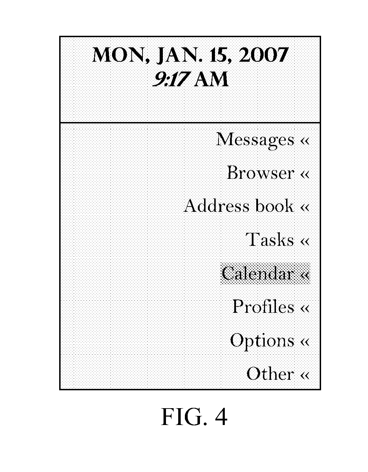

Referring to Figure 4, there is shown an exemplary menu screen that is displayed on the LCD display 24 of the portable electronic device 20. The exemplary menu screen includes a display clock that is updated according to the circuitry of the main oscillator 60 and a list of applications including an electronic mail (Messages) application, a Web browser, an Address book, a Tasks application, a Calendar application, a Profiles application and an Options application. Each of the displayed applications in the list is selectable by, for example, scrolling to the desired application using the trackwheel 30 and pressing inwardly on the trackwheel 30 in the direction of arrow "A".

It will be appreciated that the Calendar application is used for providing a graphical user interface (GUI) for the user to create calendar events and for storage of the calendar events in a database at the flash memory 42, when executed by the processor 38. The Calendar application is used for creating, displaying and storing calendar events such as appointments, lectures, exams, movies, meetings, performances, dinners, ceremonies, etc. as described below. Each calendar event includes a variety of information including a name, a date and time of the event as well as a user-selectable reminder time for the event. For example, the calendar event can include a reminder such as an audible alarm, a visual alarm or even a kinetic alarm such as a vibration, set for a user-selected time prior to the start time of the event to thereby remind the user of the event. The calendar events are viewed using a calendar view in the Calendar application. The calendar view can be any one of a month view, a week view, a day view and an agenda view. Selection of a calendar event in the calendar view results in display of the particulars of that event.

The Messages application is used for data communication between electronic devices, in the form of, for example, SMS (Short Message Service) messages or e-mail messages. A user of the portable electronic device 20 can compose, for example, e-mail messages within the Messages application using the keypad 34, for example, in conjunction with the trackwheel 30 and the LCD display 24. Such composed messages can then be transmitted over the wireless gateway, network and infrastructure 12, through the use of the communications subsystem 46 and antenna 48. Similarly, messages, such as e-mail messages, can be received at the portable electronic device 20, via the antenna 48 and communications subsystem 46, further processed at the microprocessor 38 for display on the LCD display 24 using the Messages application.

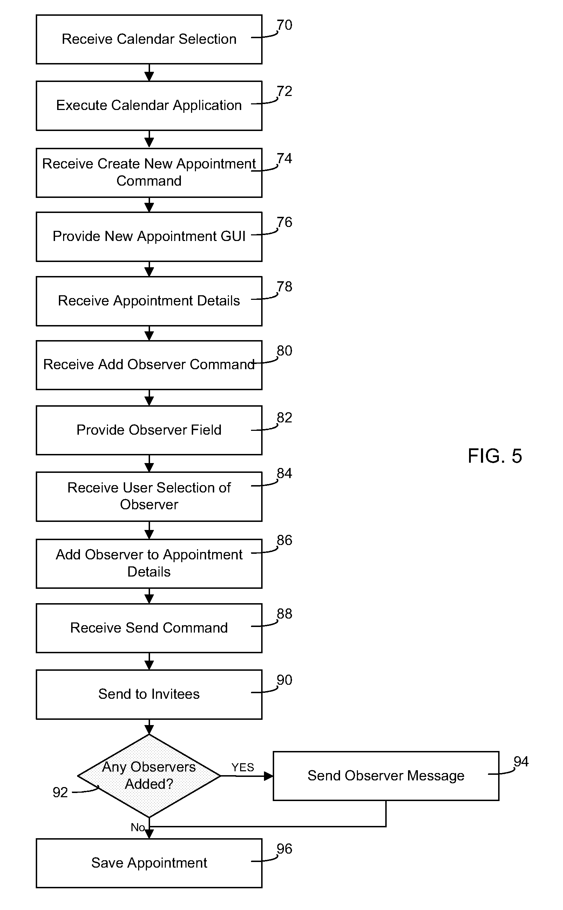

A method of providing a meeting notification will now be described with reference to Figure 5, in accordance with an aspect of one embodiment. It will be appreciated that the steps described in relation to Figure 5 are carried out by routines or subroutines of the portable electronic device 20 and result from user interaction as described. Coding of software for carrying out such steps is well within the scope of a person of ordinary skill in the art. The method includes adding an observer to a calendar event in a calendar graphical user interface displayed on the LCD display 24 at a portable electronic device 20 of an organizer of the calendar event. The calendar event is saved associated with the observer at the organizer portable electronic device 20, and sent to a portable electronic device of an observer via an electronic message from the organizer portable electronic device 20. The electronic message includes the calendar event for storage at the observer portable electronic device with a period of time, associated with the calendar event, indicated as free time in a calendar view.

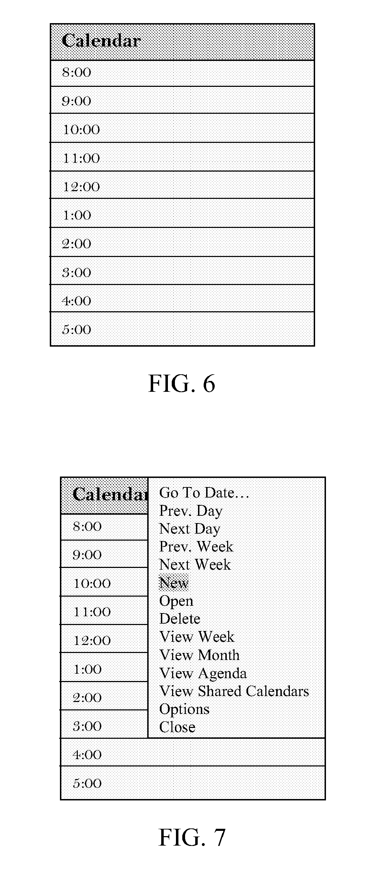

As indicated above, Figure 4 shows an exemplary menu screen that is displayed on the LCD display 24 of the portable electronic device 20. Selection of the Calendar application from the exemplary menu screen of Figure 4 by, for example, scrolling to the Calendar application using the trackwheel 30, and pressing inwardly on the trackwheel 30 in the direction of arrow "A", results in receipt of the selection at the microprocessor 38 (step 70), causing the execution of the calendar application (step 72). Execution of the calendar application results in the display of a default calendar view, as shown in Figure 6. In the example shown in Figure 6, the default calendar view is the day view. It will be appreciated that other views such as the week, month or agenda view can be displayed depending on the default view or can be selected for display. In the calendar view, calendar events such as meetings or appointments that are calendared within a time period that falls within the calendar view and are saved in the flash memory 42, are displayed on the LCD display 24 of the portable electronic device 20. In the present example, there are no calendar events scheduled between 8:00 a.m. and 5:00 p.m. for the date displayed.

In the present example, a user of the portable electronic device 20 wishes to schedule a meeting at a particular time. For the purpose of clarity, this person is referred to as the meeting organizer herein and the portable electronic device 20 is referred to as the organizer portable electronic device 20. To schedule the meeting using the organizer portable electronic device 20, the meeting organizer presses inwardly on the trackwheel 30 in the direction of arrow "A", resulting in the display of the submenu of user-selectable options, as shown in Figure 7. These options include, for example, "Go To Date", "Prev Day", "Next Day", "Prev Week", "Next Week", "New", "Open", "Delete", "View Week", "View Month", "View Agenda", "View Shared Calendars", "Options" and "Close". Selection of the "Go To Date" option provides a user-editable date field for the user to specify a date for displaying on the LCD display 24. Selection of the "Prev Day" option results in the display of the schedule for the day prior to that displayed in Figure 6. Similarly, selection of the "Next Day" option results in the display of the schedule for the day following that displayed in Figure 6. Selection of the "Prev Week" option results in the display of the schedule for the week prior to the day displayed in Figure 6. Selection of the "Next Week" option results in the display of the schedule for the week following the day displayed in Figure 6. Selection of the "New" option provides a graphical user interface for composition of a new event for addition to the calendar display. Selection of the "Open" option results in the display of details of any selected calendar event on the LCD display 24. Selection of the "Delete" option deletes a selected calendar event. Selection of the "View Week" option results in the display of the weekly schedule for the week including the day displayed in Figure 6. Selection of the "View Month" option results in the display of the monthly schedule for the month including the day displayed in Figure 5. Selection of the "View Agenda" option results in the display of calendar events in a table. Selection of the "View Shared Calendars" option results in a query being sent to the enterprise server 16 to determine shared calendars as will be discussed further below. Selection of "Options" provides an options submenu of user-selectable features. Selection of the "Close" option closes the Calendar application.

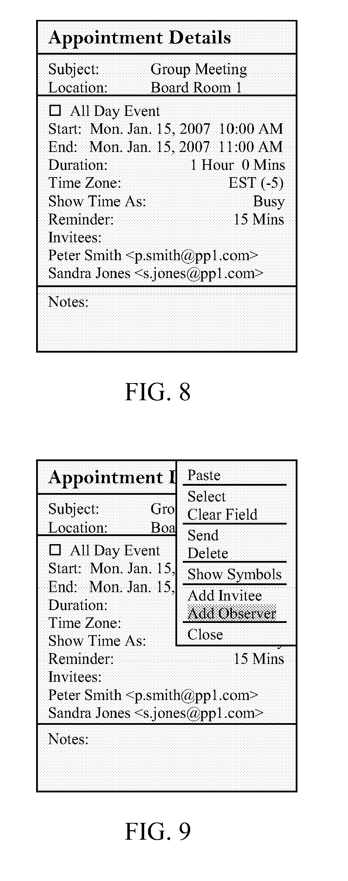

As indicated above, selection of the "New" option from the submenu displayed in Figure 7 acts as a create-new-calendar-event command (step 74) and provides a graphical user interface for composition of a new calendar event for addition to the calendar display (step 76). An exemplary graphical user interface for composition of a new calendar event is show in Figure 8. The exemplary graphical user interface shown in Figure 8 includes fields for user-entry of event details, many of such fields are shown populated with data entered by the meeting organizer using the input devices such as the trackwheel 30 and the keypad 34 in Figure 8. These fields include, for example, a "Subject", a "Location", a "Start" field, an "End" field, a "Duration", a "Time Zone", a Show Time As" field, a "Reminder" field, a list of "Invitees" and "Notes". In the example shown in Figure 8, event details are received upon user entry (step 78). These event details include, for example, the subject "Group Meeting", the location "Board Room 1 ", a start date and time, an end date and time and duration, as indicated in Figure 8. The time zone is EST (Eastern Standard Time) and a reminder is set for 15 minutes prior to the start time of the meeting. Two invitees are included in the list of invitees. It will be appreciated that these invitees are added by, for example, user-selection of an "Add Invitee" option from a submenu shown in Figure 9, followed by user entry of the an e-mail address of an invitee using the keypad 34. Alternatively, the invitee information can be added by selection of a contact from the Address book contacts stored at the portable electronic device 20, as will occur to those skilled in the art. In the present embodiment, the meeting organizer begins entry of the name of the invitee and is provided with a list of matching names from the Address book contacts, for selection. The meeting organizer can then select the appropriate name using the trackwheel 30 or continue entry of an e-mail address using the keypad 34 (step 84).

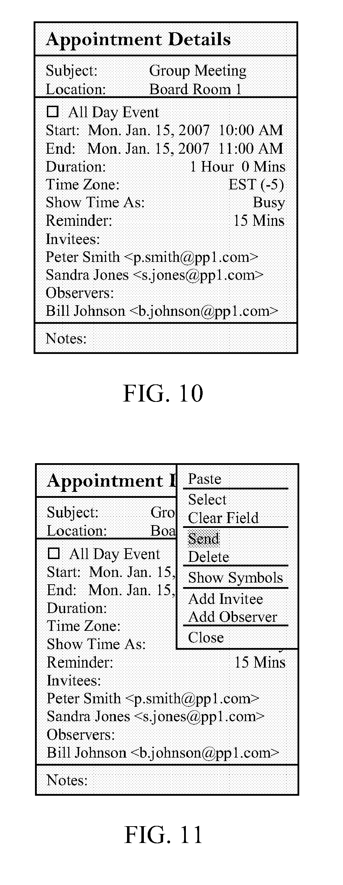

Next, the user adds an observer to the calendar event by selection of an "Add Observer" option from the submenu shown in Figure 9. As is the case for the submenu shown in Figure 7, the submenu shown in Figure 9 is displayed in response to user depression of the trackwheel 30 in the present example. It will be appreciated that each submenu can be displayed as a result of any suitable user-interaction with the portable electronic device 20. The add observer command is received (step 80) and an "Observers" field is added to the calendar-event (step 82). In the present embodiment, the meeting organizer begins entry of the name of the observer and is provided with a list of matching names from the Address book contacts, for selection. The meeting organizer can then select the appropriate name using the trackwheel 30 or continue entry of an e-mail address using the keypad 34. Upon receipt of selection of the meeting observer by entry by the organizer (step 84), the observer is added to the calendar-event (step 86), as shown in Figure 10.

Upon completion of entry of the event details including the addition of invitees, and the addition of observers, the organizer then sends the meeting details to the invitees and the observer by selection of a "Send" command from the submenu shown in Figure 11. Thus, a send command is received at the organizer portable electronic device 20 (step 88) and an invitation is sent to each of the meeting invitees (step 90). The invitation is sent electronically, via e-mail, for example, which is received at an electronic device of the invitee. Opening of the e-mail results in the display of the calendar event along with options to accept the invitation or decline the invitation. Acceptance of an invitation results in the storage of the calendar event in memory of the electronic device of the invitee, for display in a calendar view and for reminding the invitee of the meeting. When displayed in a calendar view, the duration of the calendar event, between the start time and end time, is displayed as busy time. In the event that the invitee attempts to schedule another calendar event for the same time, the invitee determines that there is a conflict given that the duration is shown as busy time. Of course, if the invitee declines the invitation, the meeting is not saved at the electronic device of the invitee. When the invitee accepts or declines the invitation, a message can be sent to the meeting organizer to advise that the invitation has been accepted or declined.

In addition to sending an invitation to each of the meeting invitees, the organizer portable electronic device 20 determines at step 90 that there is a meeting observer added to the calendar event (step 92). A notification is therefore sent to the meeting observer (step 94) via e-mail, for example, which is received at the electronic device of the observer (referred to herein as the observer portable electronic device 20B). The notification for the observer differs from that sent to the invitee in that there is no invitation to attend the meeting. The observer is also not presented with any options to accept or decline the meeting. Instead, the e-mail received by the observer includes the calendar event for storage at the observer portable electronic device with the duration of the calendar event between the start time and end time automatically indicated as free time.

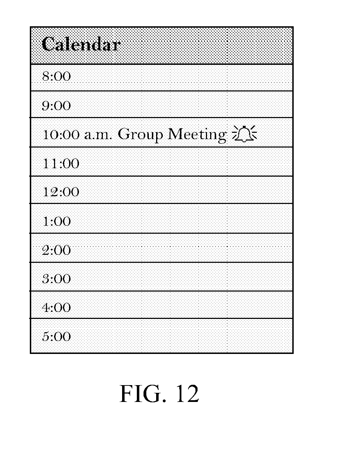

Additionally, the calendar event is also stored in the flash memory 42 at the organizer portable electronic device 20 for display in a calendar view, as shown in Figure 12. With the addition of the calendar event to the flash memory 42 of the organizer portable electronic device 20, a copy of the calendar-event data record is transmitted to the enterprise server 16 for storage of the calendar event in an appropriate one of the databases 19 at the communication system 6.

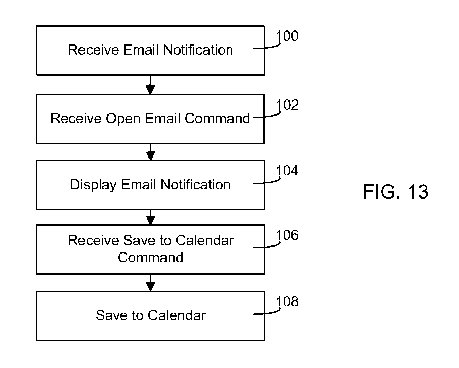

Reference is now made to Figure 13 to describe a method of providing a meeting notification in accordance with another aspect of an embodiment. It will again be appreciated that the steps described in relation to Figure 13 are carried out by routines or subroutines of the portable electronic device. Coding of software for carrying out such steps is well within the scope of a person of ordinary skill in the art.

The e-mail notification sent from the organizer portable electronic device 20 is received at a portable electronic device of the observer. For the purpose of the present example, the portable electronic device of the observer is similar to that of the portable electronic device of the meeting organizer and is referred to herein as the observer portable electronic device 20B, as shown in the example of Figure 1. It will be appreciated, however that it is not necessary that the portable electronic devices are the same. These portable electronic devices can differ.

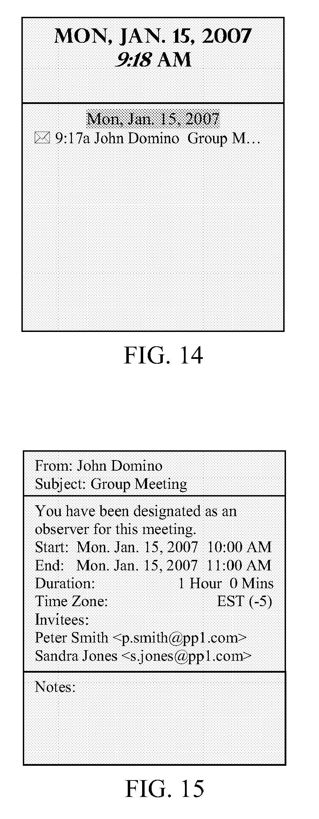

After receipt of the e-mail at the observer portable electronic device 20B, the user selects the Messages application resulting in the display of a list of received electronic messages such as that shown in Figure 14. In the example shown in Figure 14, only one e-mail message is shown in the list. The observer then scrolls to the e-mail and selects an open command from an e-mail submenu, for example. Upon receipt of an open e-mail command (step 102), the electronic notification message sent from the organizer portable electronic device 20 is displayed at the observer portable electronic device 20B. An exemplary electronic notification message is shown in Figure 15. As shown, the electronic notification message indicates that the observer has been designated as an observer for the meeting. There is no option provided for accepting or declining the meeting and there is no message that is sent from the observer portable electronic device 20B to the organizer portable electronic device 20 to indicate that the meeting has been accepted or declined. Clearly the notification received by the observer is not an invitation to the meeting.

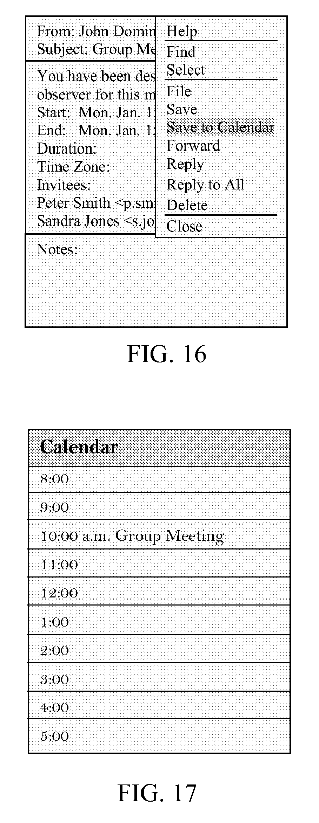

In the present example, the meeting observer can select an option to store the calendar event for storage in a calendar view by selection of a "Save to Calendar" option from a submenu when viewing the electronic message, as shown in Figure 16. Alternatively, the calendar event can be automatically saved at the observer portable electronic device 20B. Upon receipt of the save to calendar command (step 106), the calendar event is stored in the memory at the observer portable electronic device 20B (step 108). Thus, execution of the Calendar application by, for example, selection of the calendar application from a menu screen such as that shown in Figure 3, results in the display of a default calendar view. In the present example, the default calendar view is a day view for the date of the calendar event ("Group Meeting"), as shown in Figure 17. With the addition of the calendar event to the flash memory of the observer portable electronic device 20B, a corresponding calendar-event data record is transmitted to the enterprise server 16 for storage of the calendar event in an appropriate one of the databases 19 at the communication system 6.

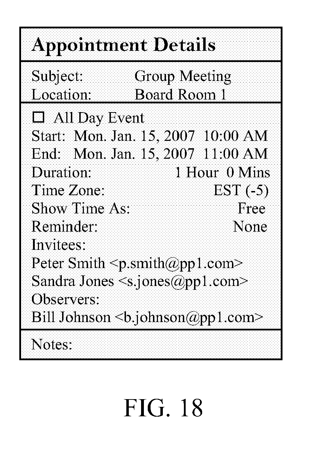

Selection of the "Group Meeting" from the calendar view results in the display of the event details as shown in Figure 18. The "Show Time As" field in the exemplary screen of Figure 18 indicates that the time is shown as free at the observer portable electronic device 20B. Thus, the observer is free to schedule other calendar events such as meetings or appointments during that time period without conflict. In the present example, there is no reminder provided for the observer since the observer will not be attending the group meeting. It will be appreciated that a reminder can be provided, however. It is also contemplated that rather than a reminder prior to the start of the meeting, a reminder can be issued for the observer at the scheduled end of the meeting.

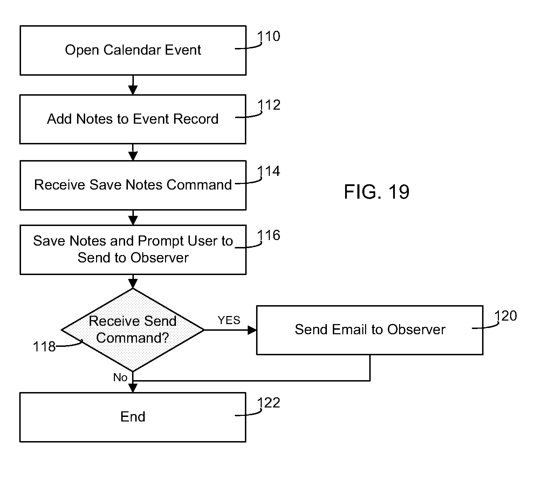

Reference is now made to Figure 19 to describe a method of providing a meeting notification in accordance with another aspect of an embodiment. It will again be appreciated that the steps described in relation to Figure 19 are carried out by routines or subroutines of the portable electronic device 20 and result from user interaction as described. Coding of software for carrying out such steps is well within the scope of a person of ordinary skill in the art.

The meeting organizer may wish to make amendments or changes to the calendar event. For example, at the end of the "Group Meeting", the meeting organizer may wish to make a note or summary of the meeting for storage in association with the calendar event. From the calendar screen shown in Figure 12, the meeting organizer opens the calendar event by, for example, scrolling to the "Group Meeting" and pressing inwardly on the trackwheel 30, followed by selection of an "Open" option from a calendar submenu, resulting in the display of the calendar event, as shown in Figure 10 (step 110). In the present example, the meeting organizer scrolls to the "Notes" field and adds notes to the field to summarize the outcome of the meeting (step 112). It will be appreciated that any notes can be added. Furthermore, the amendments or changes are not limited to the "Notes" field. For example, the time may require changing if not all required attendees can attend at the time initially proposed by the meeting organizer.

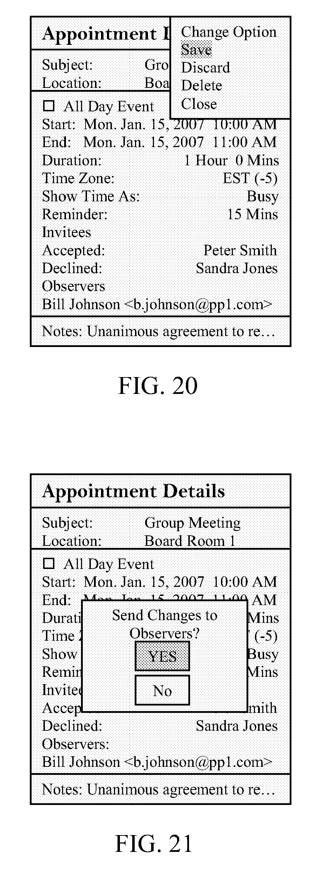

After adding the notes to the "Group Meeting" calendar event, the organizer saves the notes to the calendar event by selecting the "Save" option from a list of options in a calendar event submenu, as shown in Figure 20. Upon receipt of the save command (step 114), the calendar event is stored with the added notes and the organizer is prompted to select one of a "Yes" and a "No" option for sending the changes to the observer, as shown in Figure 21 (step 116). It will be appreciated that rather than prompting the user as to whether or not to send the changes to the observer, the changes can be sent automatically upon saving the changes to the calendared record. Alternatively, the changes can be sent to all of the invitees and the observers for the calendar event, either by prompting the organizer or automatically. In the present embodiment, selection of the "Yes" option acts as a send command (step 118) and causes an electronic message including the changes made to the calendar event, to be sent by, for example, e-mail to the observer (step 120). Selection of the "No" option ends the subroutine without sending the changes to the observer.

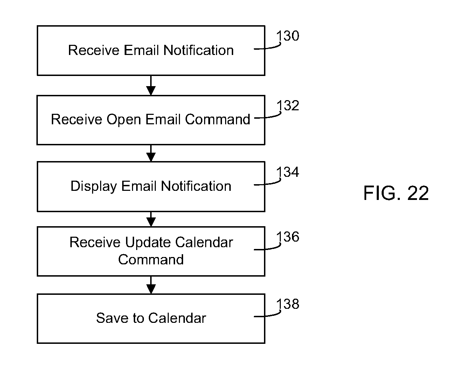

Reference is now made to Figure 22 to describe a method of providing a meeting notification in accordance with another aspect of an embodiment. It will again be appreciated that the steps described in relation to Figure 22 are carried out by routines or subroutines at a portable electronic device. Coding of software for carrying out such steps is well within the scope of a person of ordinary skill in the art.

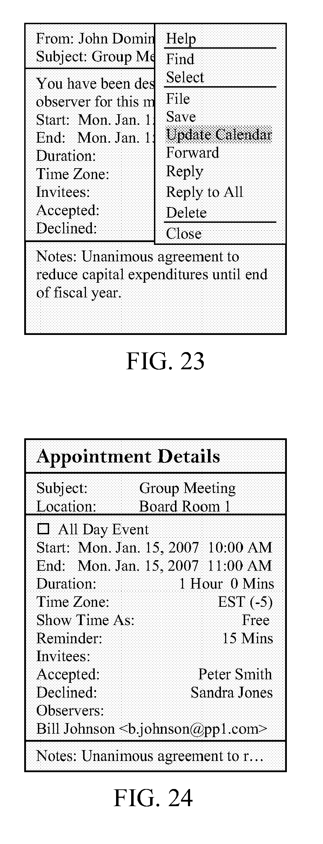

The electronic mail notification sent at step 120 is received at the observer portable electronic device 20B (step 130) and results in a message displayed in the list of received electronic messages. The open e-mail command is received (step 132) as a result of the observer opening the e-mail, as described above with reference to Figure 13, and results in the display of the e-mail similar to that shown in Figure 15. This e-mail, however, includes the meeting notes, as shown in Figure 23 (step 134). Thus, the changes to the meeting are provided for the observer. In the present example, the meeting outcome is provided in the notes added by the meeting organizer at the end of the meeting. The observer can update the calendar event by selection of an "Update Calendar" option from a submenu list of options (step 136), causing the previously saved calendar event to be updated by overwriting the changed calendar event including the notes over the previously saved calendar event. Thus, the notes are saved for later viewing by the observer, as shown in Figure 24.

In the aspects of embodiments described above, an observer is added to the event details upon creation of the new calendar event. It is possible, however, that no observer is added to the calendar event until after the calendar event is created and saved. Thus, either the original meeting organizer or another person, such as one of the invitees, takes on an organizer role and adds the observer to the calendar event after scheduling. Rather than creating a new calendar event, the observer is added by changing the calendar event to include the observer. In this case, the observer receives an e-mail notification upon saving of the edited calendar event, rather than upon saving of a new calendar event.

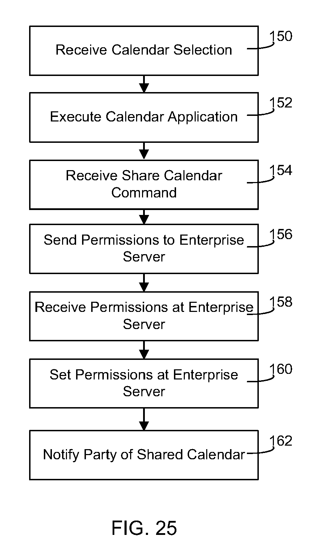

Referring now to Figure 25, there is shown a flowchart illustrating steps in sharing calendar events according to an aspect of an embodiment. Coding of software for carrying out the steps shown and described below is well within the scope of a person of ordinary skill in the art. For the purpose of the present description, the previous example will be carried through to describe the present embodiment by way of example. As indicated above, when the calendar event is saved to the calendar-event data records at the observer portable electronic device 20B, a copy of the calendar event (data record) is transmitted to the communication system 6 for storage in an appropriate one of the databases 19 that corresponds to the calendar database for the observer portable electronic device 20B. It will be appreciated that copies of all calendar events stored at the observer portable electronic device 20B are stored in the respective calendar database of the databases 10 at the communication system 6. For the purpose of the present example, the observer wishes to share calendar events stored at the observer portable electronic device 20B with a third party.

Selection of the Calendar application at the observer portable electronic device 20B from an exemplary menu screen such as the screen shown in Figure 4, results in receipt of the selection at the microprocessor of the observer portable electronic device 20B (step 150), causing execution of the calendar application (step 152). Execution of the calendar application results in the display of the default calendar view. It will be appreciated that the default calendar view can be any view and that the default calendar view can include several or no calendar events. As indicated above, the default calendar view in the present example is a day view for the current date, which includes the calendar event ("Group Meeting"), as shown in Figure 17. It will be appreciated that other views such as the week, month or agenda view can be displayed depending on the default view or can be selected for display. In the calendar view, calendar events such as meetings or appointments that are calendared within the time period that falls within the calendar view and are saved at the observer portable electronic device 20B, are displayed on the LCD display 24 of the observer portable electronic device 20B. In the present example, only the "Group Meeting" calendar event is scheduled between 8:00 a.m. and 5:00 p.m. for the date displayed in the default view.

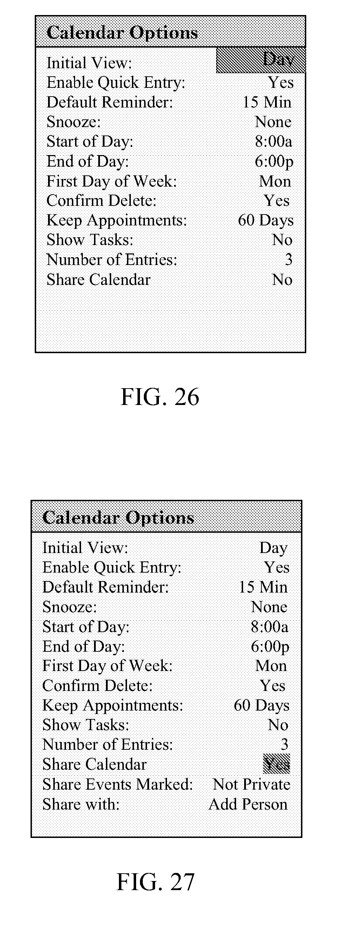

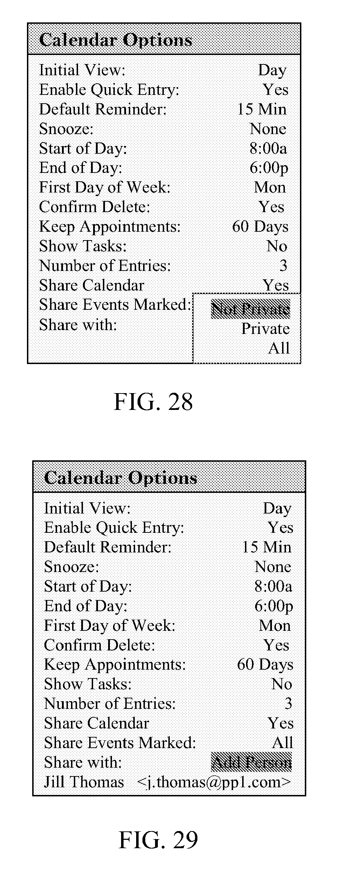

Next, a share calendar command is received at the observer portable electronic device 20B by user selection of a "Share Calendar" option (step 154). For the purpose of the present example, the "Share Calendar" option is user-selected by selection of the "Options" submenu from a calendar menu such as that shown in Figure 7. This results in the display of the calendar options submenu as shown in Figure 26. A user-selectable option to "Share Calendar" is provided within the calendar options submenu of Figure 26. The user is provided with this option to permit others to view the calendar events using other respective electronic devices, or to not share calendar events with others by toggling between "Yes" and "No" in the "Share Calendar" option. Toggling to the "Yes" option to share the calendar causes the display of further user-selectable options, including the "Share Events Marked" option and the "Share With" option. Selection of the "Share Events Marked" option provides user-selectable options to share only those events that are not marked as being private (or personal) events, to share only those calendar events that are marked as being private events, or to share all calendar events, as shown in the exemplary screen of Figure 28. Selection of the "Share With" option results in display of a list of contacts from the Address book contacts stored at the portable electronic device 20B, for user-selection of a contact. Alternatively, the user (observer) begins entry of the name of the person to share the calendar with and a list of matching names from the Address book contacts is provided for selection. In the exemplary screen shown in Figure 29, the observer has selected to share all calendar events at the observer portable electronic device 20B with Jill Thomas. After adding a person to share calendar events with, and upon exiting the calendar options submenu, the observer is presented with a message indicating that changes have been made to the calendar options and requiring the user to select one of three options including, options to save the changes made, to discard the changes made or to cancel exiting the calendar options. Selection of the "save" option causes the changes to be saved to the observer portable electronic device 20B, acting as command to share the calendar 154.

Permissions are then sent to the enterprise server 16 to permit view-only access to the calendar records according the changes made in the calendar options submenu (step 156). The change in permission is received at the enterprise server 16 (step 158). Thus, in the present example, permissions are set at the enterprise server 16 to permit Jill Thomas to access the one of the databases 19 at the communication system 6 in which the calendar records of the observer are stored. Thus, Jill Thomas is permitted access to this database of calendar records via a respective one of the PIM connectors 18.

When a second party is given access to the calendar records of a first party, the second party is advised that access to the data records of the first party has been granted (step 162). In the present embodiment, the first party sends an e-mail to the second party advising that the calendar data records of the first party have been made available to the second party. It is possible, that an e-mail is automatically generated and sent to the second party. Continuing with the present example, the observer sends an email to Jill Thomas to advise that the calendar records of the observer are accessible.

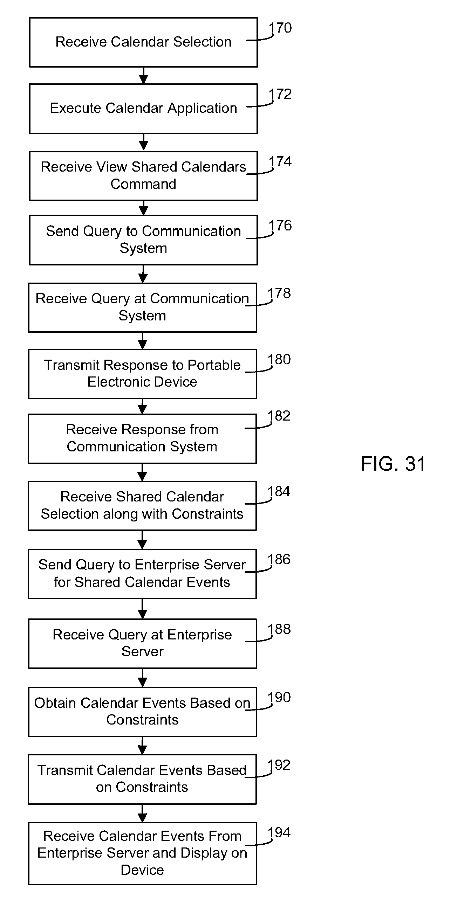

Reference is now made to Figure 31 to describe a method of sharing calendar events according to another aspect of an embodiment. Coding of software for carrying out the steps in the flowchart of Figure 31 is well within the scope of a person of ordinary skill in the art. Again the previous example will be carried through to describe the present embodiment by way of example.

The e-mail notification sent at step 162 is received at a portable electronic device of the second party (Jill Thomas in the present example) (step 170). For the purpose of the present example, the portable electronic device of the second party is referred to as the requester portable electronic device 20C and the requester portable electronic device 20C shown in Figure 1 is similar to that of the organizer portable electronic device 20, as shown in the example of Figure 2. It will be appreciated, however that it is not necessary that the portable electronic devices are the same. These portable electronic devices can differ.

After receiving the notification sent at step 162, the requester (Jill Thomas in the present example) wishes to view the calendar events which she has been granted permission to view. Selection of the Calendar application at the requester portable electronic device 20C from an exemplary menu screen such as the screen shown in Figure 4, results in receipt of the selection at the microprocessor of the requester portable electronic device 20C (step 170), causing the execution of the calendar application (step 172). Execution of the calendar application results in the display of the default calendar view as discussed above. Next, the requester portable electronic device 20C receives a view shared calendars command by user selection of a "View Shared Calendars" option from a calendar menu such as the menu shown in Figure 7 (step 174). Upon receipt of the view shared calendars command, the requester portable electronic device 20C sends a query to the enterprise server 16 for a list of all calendars that the requester has been granted permission to view (step 176).

The query is received at the communication system 6 and passed on to the enterprise server 16 and to the respective one of the PIM connectors 18 for the requester (step 178). A response is provided by the respective one of the PIM connectors 18 for the requester, to the enterprise server 16 and the response is transmitted from the communication system 6 to the requester portable electronic device 20C (step 180).

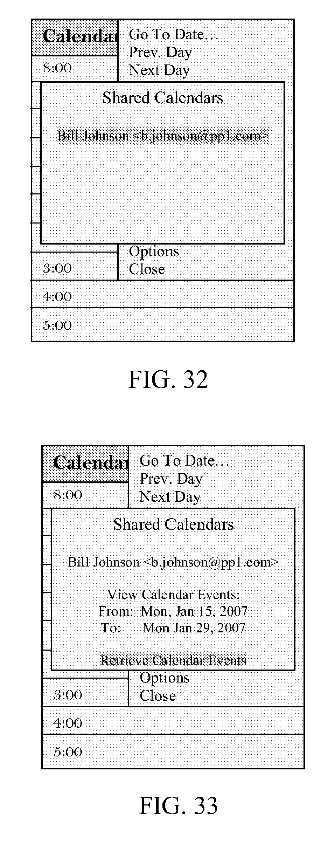

The response is received at the requester portable electronic device 20C and a list of calendars shared with the requester is displayed on the requester portable electronic device 20C (step 182), as shown in the exemplary screen of Figure 32. In the present example, only a single calendar is shared with the requester, as shown in Figure 32. The shared calendar shown in Figure 32 is the calendar of "Bill Johnson <b.johnson@pp1.com>". It will be appreciated that more than one calendar can be listed as a shared calendar for user selection. The requester then selects a calendar for viewing (in the present example, there is only one available to select from) and a set of constraints is provided for user-selection. The constraints include the start day and end day thereby defining a time period for shared calendar events for viewing. Thus, all shared calendar events that have at least one of a start time and an end time that falls in the time period starting at the start day and ending at the end day, are requested by the requester for viewing. In the exemplary screen of Figure 33, all shared calendar events from the start day, Monday January 15, 2007, to the end day, Monday January 29, 2007, are requested. These time constraints are user-selectable and can be changed to any suitable start and end days. The shared calendar selection along with the constraints are received at the requester portable electronic device 20C by, for example, user selection of a "Retrieve Calendar Events" option (step 184). A query is then transmitted from the requester portable electronic device 20C to the enterprise server 16 at the communication system 6, for retrieving the calendar events of the selected shared calendar based on the time constraints (step 186).

The query is received at the communication system 6 and forwarded to the enterprise server 16 (step 188). The enterprise server 16 sends a request to the respective one of the PIM connectors 18 and the shared calendar events from the selected calendar that meet the set of constraints are retrieved and forwarded to the enterprise server 16 (step 190). Next, the calendar events forwarded to the enterprise server 16 at step 190 are then transmitted to the requester portable electronic device 20C (step 192).

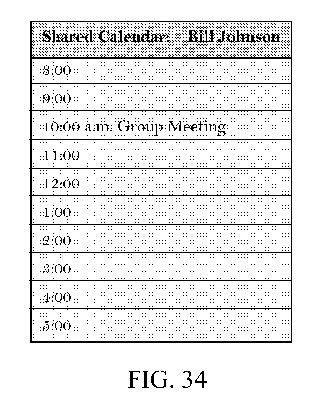

The calendar events are received at the requester portable electronic device 20C and displayed in a default calendar view (step 194), as shown in Figure 34. In the present example, the default calendar view is a day view. It will be appreciated that the default calendar view can be any view such as a month, week or agenda view, however.

The shared calendar events received at the requester portable electronic device 20C are not saved in flash memory at the requester portable electronic device 20C. Instead, these shared calendar events are provided only for viewing on request at the requester portable electronic device. Upon exiting the calendar application, for example, the shared calendar events are lost and, if the requester wishes to again view those calendar events, the events are transmitted again to the requester, as described in relation to Figure 31.

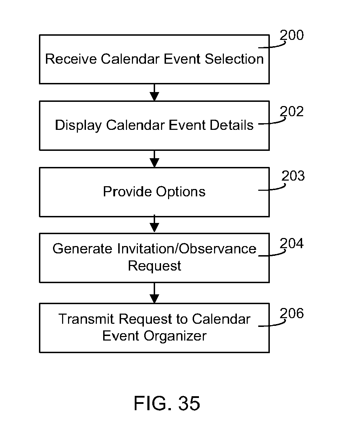

Reference is now made to Figure 35 to describe a method of requesting addition to a calendar event according to another aspect of an embodiment. Coding of software for carrying out the steps in the flowchart of Figure 35 is well within the scope of a person of ordinary skill in the art. Again the previous example will be carried through to describe the present embodiment by way of example.

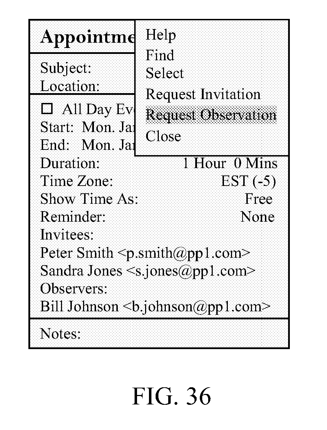

Selection of the "Group Meeting" from the calendar view shown in Figure 35 (step 200) results in the display of the event details as shown in Figure 18 (step 202). In the present embodiment, the requester wishes to be added as an observer to the calendar event. Thus, the requester requests observation. To request observation, the requester selects a user-selectable option to "Request Observation" from a calendar menu in the shared calendar event screen, as shown in Figure 36. It will be appreciated that the menu is displayed in response to user interaction such as the user pressing inwardly on the trackwheel of the requester portable electronic device 20C. Receipt of the "Request Observation" selection (step 204) results in the generation of an electronic request message for addition as an observer, to the calendar event, followed by transmission of the electronic request message to the organizer portable electronic device 20.

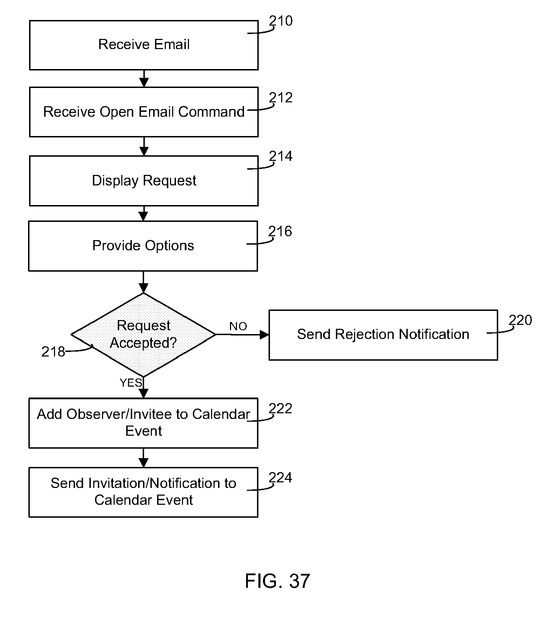

Referring now to Figure 37, there is shown a flowchart illustrating steps in a method of requesting addition to a calendar event according to another embodiment. Coding of software for carrying out the steps in the flowchart of Figure 37 is well within the scope of a person of ordinary skill in the art. Again the previous example will be carried through to describe the present embodiment by way of example.

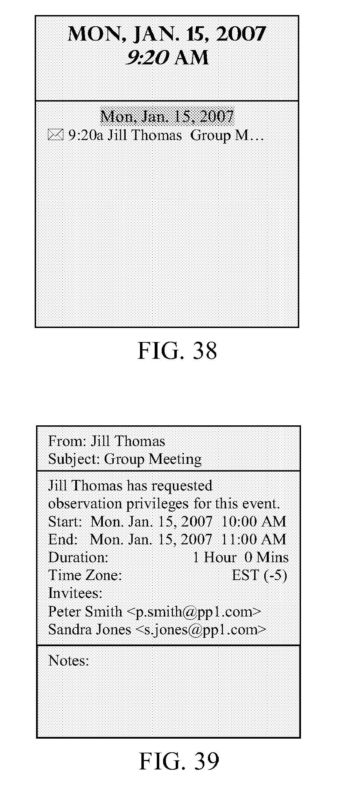

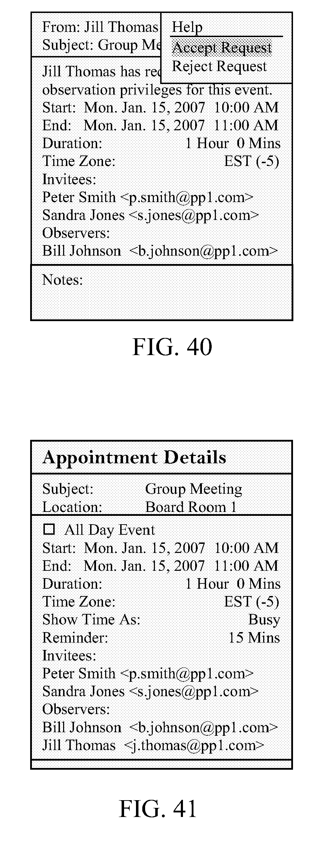

After receipt of the e-mail at the organizer portable electronic device 20 (step 210), the organizer selects the Messages application resulting in the display of a list of received electronic messages such as that shown in Figure 38. In the example shown in Figure 38, only one e-mail message is shown in the list. The organizer then scrolls to the e-mail using the trackwheel 30 and selects an open command from an e-mail menu, for example. Upon receipt of the open command (step 212), the electronic request message sent from the requester portable electronic device 20C is displayed at the organizer portable electronic device 20 (step 214). An exemplary electronic request message is shown in Figure 39. As shown, the electronic request message indicates that the requester is requesting observation privileges for the calendar event. The organizer is also provided with a list of options by, for example, pressing inwardly on the trackwheel 30 in the direction of arrow "A" to display a request menu such as the exemplary menu shown in Figure 40 (step 216). As shown, the organizer is provided with the options to "Accept Request" and to "Reject Request" and the portable electronic device 20 awaits input (Step 218). Selection of the "Reject Request" option results in a notification being sent to the requester via e-mail, indicating that the request to be granted observation privileges has been rejected (step 220). Alternatively, the organizer selects the "Accept Request" option at step 216. Upon receipt of selection of the "Accept Request" option by the organizer, the observer is automatically added to the calendar-event details (step 222), as shown in Figure 41.

A notification is also sent to the requester (step 224) via e-mail, for example, which is received at the portable electronic device of the requester 20C. As described above, the notification is an e-mail that is sent to the requester and that includes the calendar event for storage at the requester electronic device 20C with the duration of the calendar event between the start time and end time automatically indicated as free time. Receipt of the notification is described above with reference to Figure 22.

In the examples detailed above, the requester sends a request for observation privileges. As shown in Figure 36, however, the requester can also request an invitation to the calendar event. Receipt of an invitation request (by user selection of the "Request Invitation" option) results in a request for an invitation being sent to the organizer portable electronic device 20. Thus, if accepted by the organizer, the requester is added to the list of invitees rather than the list of observers as shown in Figure 36. Further, an invitation is sent electronically, via e-mail, for example, which is received at the requester portable electronic device 20C, as described above in relation to Figure 11. It will also be appreciated that an invitee can share their calendar and that a requester can request observation or invitation from the shared calendar of an invitee.

It will be appreciated that the portable electronic device of Figure 1 is shown for exemplary purposes only. Other portable electronic devices such as that shown in Figure 24 are possible. Referring to Figure 24, another exemplary portable electronic device 20 is shown. The portable electronic device 20 includes a housing 22 that frames an LCD display 24. In the present example, however, the portable electronic device 20 includes a trackball 31, rather than a trackwheel. The trackball 31 can be depressed as a means to provide additional user input. The microprocessor 38 receives input from the trackball 31 which is used for user selection of features from a list or a table on the LCD display 24 of the portable electronic device 22. Selection is carried out by rolling the trackball 31 to roll a cursor (or highlighted region), for example, to the desired selection and pressing inwardly on the trackball 31. The portable electronic device 20 shown in Figure 24 includes many other features, including, for example, a key pad 34 and other features similar to those described above with reference to Figure 1. It will also be appreciated that reference is made to a trackwheel in the above description for exemplary purposes only, and a trackball 31 such as that shown in Figure 24 can be used.

While embodiments described herein are described by way of particular examples, it will be understood that modifications and variations to these examples are well within the scope and sphere of the present application. For example, it will be appreciated that the displayed screens can differ. As indicated, the portable electronic device can also differ while still performing the same functions. The options provided and selection of options from menus and submenus can vary while similar functions are still performed by the portable electronic device. Further, while one method of sharing calendars is described above, other methods are possible. Many other modifications and variations may occur to those skilled in the art. All such modifications and variations are believed to be within the sphere and scope of the present application.

## Claims

1. A method of sharing with a portable electronic device of a first entity, calendar-event records associated with a second entity and accessible by a server, the method comprising:
receiving at the server permission to share with said first entity said calendar-event records associated with said second entity;
receiving at said server a query comprising calendar-event time constraints;
obtaining at said server ones of said calendar-event records that meet said calendar-event time constraints; and
transmitting, from said server to said portable electronic device of said first entity, said ones of said calendar-event records that meet said calendar-event time constraints.

2. The method according to claim 1, wherein said calendar-event time constraints comprise at least a start day and an end day defining a time period.

3. The method according to claim 2, wherein obtaining at said server comprises obtaining all calendar-event records that have a start date and/or an end date that falls in said time period.

4. The method according to any one of claims 1 to 3, comprising:
receiving at said server a query for a list of all calendars for which viewing permission has been granted to the first entity; and
transmitting to said electronic device of said first entity said list of said calendars prior to receiving said query comprising calendar-event time constraints.

5. The method according to claim 4, wherein said receiving said query comprising calendar-event time constraints comprises receiving a selection of one of said calendars from said list and receiving said calendar-event time constraints.

6. The method according to any one of claims 1 to 5, wherein said receiving permission comprises receiving view-only permission for said calendar-event records.

7. A method of a portable electronic device of a first entity requesting shared calendar-event records associated with a second entity and accessible by a server, the method comprising:
receiving at said portable electronic device of said first entity notification of permission to view said shared calendar-event records associated with said second entity;
transmitting a request, from said portable electronic device of said first entity to said server, for ones of said shared calendar-event records that meet a set of time constraints; and
receiving said ones of said shared calendar-event records for display on said portable electronic device of said first entity.

8. The method according to claim 7, wherein said time constraints comprise at least a start day and an end day defining a time period.

9. The method according to claim 8, wherein said requesting comprises requesting all calendar-event records that have a start date and/or an end date that falls in said time period.

10. The method according to any one of claims 7 to 9, comprising receiving said set of time constraints from a user input device at said portable electronic device of said first entity, prior to transmitting.

11. The method according to any one of claims 7 to 10, comprising transmitting, from said portable electronic device of said first entity to said server, a request for a list of all calendars for which viewing permission has been granted to the first entity, prior to said receiving at said portable electronic device of said first entity, notification of permission to view said shared calendar-event records, and wherein said receiving at said portable electronic device of said first entity notification of permission to view said shared calendar-event records comprises receiving at said portable electronic device of said first entity said list of all calendars for which viewing permission has been granted.

12. The method according to claim 10, wherein said transmitting, from said portable electronic device of said first entity to said server, a request for ones of said shared calendar-event records that meet said set of time constraints comprises transmitting a selection of said one of said list of all calendars for which viewing permission has been granted along with said set of time constraints.

13. A server for sharing with a portable electronic device of a first entity, calendar-event records associated with a second entity, the server comprising:
a memory device for storing computer readable code;
a processor for executing said stored code;
wherein said processor when executing said code causes the server to perform the method of any one of claims 1 to 6.

14. A portable electronic device for requesting shared calendar-event records associated with a second entity and accessible by a server, the portable electronic device comprising:
a display device;
a user input device;
a memory;
a communications system for effecting communication to and from said electronic device;
a microprocessor connected to the memory, the user input device, the display device, and the communications system; and
an application, for execution by the microprocessor, for causing the portable electronic device to perform the method of any one of claims 7 to 12.

15. A computer program product for a system server, the computer program product comprising a computer-readable medium having computer-readable code embodied therein for causing the server to perform the method of any one of claims 1 to 6.

16. A computer program product for a portable electronic device, the computer program product comprising a computer-readable medium having computer-readable code embodied therein for causing the portable electronic device to perform the method of any one of claims 7 to 12.

17. A communication system comprising a server according to claim 13, a plurality of portable electronic devices according to claim 14 and at least one second entity having associated therewith shared calendar-event records accessible by the server.

## Amended claims

### Amended claims in accordance with Rule 137(2) EPC.

**1.** A method of sharing with a portable electronic device (20C) of a first entity calendar-event records associated with a second entity and accessible by a server (16), the method comprising:
receiving (158) at the server (16) permission to share with said first entity said calendar-event records associated with said second entity;
receiving (188) at said server (16) a query comprising calendar-event time constraints;
obtaining (190) at said server (16) ones of said calendar-event records that meet said calendar-event time constraints; and
transmitting (192), from said server (16) to said portable electronic device (20C) of said first entity, said ones of said calendar-event records that meet said calendar-event time constraints.

**2.** The method according to claim 1, wherein said calendar-event time constraints comprise at least a start day and an end day defining a time period.

**3.** The method according to claim 2, wherein obtaining (192) at said server (16) comprises obtaining all calendar-event records that have a start date and/or an end date that falls in said time period.

**4.** The method according to any one of claims 1 to 3, comprising:
receiving (178) at said server (16) a query for a list of all calendars for which viewing permission has been granted to the first entity; and
transmitting (180) to said portable electronic device (20C) of said first entity said list of said calendars prior to receiving (188) said query comprising calendar-event time constraints.

**5.** The method according to claim 4, wherein said receiving (188) said query comprising calendar-event time constraints comprises receiving a selection of one of said calendars from said list and receiving said calendar-event time constraints.

**6.** The method according to any one of claims 1 to 5, wherein said receiving (158) permission comprises receiving view-only permission for said calendar-event records.

**7.** A method of a portable electronic device (20C) of a first entity requesting shared calendar-event records associated with a second entity and accessible by a server (16), the method comprising:
receiving (154) at said portable electronic device (20C) of said first entity notification of permission to view said shared calendar-event records associated with said second entity;
transmitting (186) a request, from said portable electronic device (20C) of said first entity to said server (16), for ones of said shared calendar-event records that meet a set of time constraints; and
receiving (194) said ones of said shared calendar-event records for display on said portable electronic device (20C) of said first entity.

**8.** The method according to claim 7, wherein said time constraints comprise at least a start day and an end day defining a time period.

**9.** The method according to claim 8, wherein said transmitting a request comprises transmitting a request for all calendar-event records that have a start date and/or an end date that falls in said time period.

**10.** The method according to any one of claims 7 to 9, comprising receiving said set of time constraints from a user input device (30, 34) at said portable electronic device (20C) of said first entity, prior to transmitting.

**11.** The method according to any one of claims 7 to 10, comprising transmitting (176), from said portable electronic device (20C) of said first entity to said server (16), a request for a list of all calendars for which viewing permission has been granted to the first entity, prior to said receiving (154) at said portable electronic device of said first entity, notification of permission to view said shared calendar-event records, and wherein said receiving at said portable electronic device of said first entity notification of permission to view said shared calendar-event records comprises receiving at said portable electronic device of said first entity said list of all calendars for which viewing permission has been granted.

**12.** The method according to claim 10, wherein said transmitting (186), from said portable electronic device (20C) of said first entity to said server (16), a request for ones of said shared calendar-event records that meet said set of time constraints comprises transmitting a selection of said one of said list of all calendars for which viewing permission has been granted along with said set of time constraints.

**13.** A server (16) for sharing with a portable electronic device (20C) of a first entity, calendar-event records associated with a second entity, the server comprising:
a memory device for storing computer readable code;
a processor for executing said stored code;
wherein said processor when executing said code causes the server to perform the method of any one of claims 1 to 6.

**14.** A portable electronic device (20C) for requesting shared calendar-event records associated with a second entity and accessible by a server (16), the portable electronic device comprising:
a display device (24);
a user input device (30, 34);
a memory (42);
a communications system (46) for effecting communication to and from said portable electronic device;
a microprocessor (38) connected to the memory, the user input device, the display device, and the communications system; and
an application, for execution by the microprocessor, for causing the portable electronic device to perform the method of any one of claims 7 to 12.

**15.** A computer program product for a system server, the computer program product comprising a computer-readable medium having computer-readable code embodied therein for causing the server to perform the method of any one of claims 1 to 6.

**16.** A computer program product for a portable electronic device (20C), the computer program product comprising a computer-readable medium (42) having computer-readable code embodied therein for causing the portable electronic device to perform the method of any one of claims 7 to 12.

**17.** A communication system (6) comprising a server (16) according to claim 13, a plurality of portable electronic devices (20C) according to claim 14 and at least one second entity having associated therewith shared calendar-event records accessible by the server.
